# EUROPÄISCHE PATENTSCHRIFT

(11) **EP 2 802 475 B1**
(45) Veröffentlichungstag und Bekanntmachung des Hinweises auf die Patenterteilung: **09.12.2015**
(21) Anmeldenummer: 12812528.3
(22) Anmeldetag: 19.12.2012
(51) Int. Cl.: B60K 37/02

(54) **VORRICHTUNG ZUR ANZEIGE VON INFORMATIONEN IN EINEM HYBRIDFAHRZEUG**
DEVICE FOR DISPLAYING INFORMATION IN A HYBRID VEHICLE
DISPOSITIF D'AFFICHAGE D'INFORMATIONS DANS UN VÉHICULE HYBRIDE

(30) Priorität: 13.01.2012 DE 102012000584
(43) Veröffentlichungstag der Anmeldung: 19.11.2014
(73) Patentinhaber: Audi AG, 85045 Ingolstadt (DE)
(72) Erfinder: STRASSER, Roman, 85080 Gaimersheim (DE)
(74) Vertreter: Brandt, Kai
(86) Internationale Anmeldenummer: PCT/EP2012/005247
(87) Internationale Veröffentlichungsnummer: WO 2013/104401

(56) Entgegenhaltungen:
- DE-A1-102006 017 634
- DE-A1-102007 030 524
- DE-A1-102010 010 443
- DE-C1- 19 533 829

## Beschreibung

Die Erfindung betrifft eine Vorrichtung zur Anzeige von Informationen in einem Hybridfahrzeug, mit einem Anzeigeinstrument, nach der im Oberbegriff der Ansprüche 1 und 2 näher definierten Art.

Eine gattungsgemäße Vorrichtung ist aus der DE 195 33 829 C1 bekannt. Dabei weist das Anzeigeinstrument mehrere veränderbare Bereichsmarkierungen auf, die sich beispielsweise bei einer Veränderung der Temperatur der den Elektromotor mit Strom versorgenden Batterie verschieben können.

Der Elektromotor eines Hybridfahrzeugs kann in an sich bekannter Weise in einem sogenannten Boostbetrieb, in dem die eigentliche Nennleistung kurzzeitig überschritten wird, betrieben werden. Ein solches Boosten lässt sich beispielsweise bei einem Überholvorgang nutzen und kann zum Beispiel durch einen Kick-down, also ein vollständiges Durchtreten des Gaspedals, bei dem die maximale Leistung des Antriebs abgerufen wird, ausgelöst werden. Ein Beispiel für einen solchen Boostbetrieb ist in der DE 10 2009 021 456 A1 angegeben.

Die DE 10 2010 010 443 A1 beschreibt eine Anzeigevorrichtung eines Kraftfahrzeugs, bei welcher in einem mittleren Bereich eines Anzeigefelds eine zur Verfügung stehende Boostdauer eines Elektromotors des Kraftfahrzeugs dargestellt wird.

Eine weitere Anzeigevorrichtung für ein Kraftfahrzeug ist in der DE 10 2007 030 524 A1 beschrieben. Diese zeigt einen Zeiger, der in einer ersten Stellung die fehlende Fahrbereitschaft und in einer zweiten Stellung die Fahrbereitschaft zusätzlich signalisiert.

Es ist Aufgabe der vorliegenden Erfindung, eine Vorrichtung zur Anzeige von Informationen in einem Hybridfahrzeug zu schaffen, die dem Fahrer desselben eine bessere Rückmeldung über den aktuellen und den zu erwartenden Betriebszustand der Antriebsquelle des Hybridfahrzeugs gibt.

Erfindungsgemäß wird diese Aufgabe durch die in Anspruch 1 genannten Merkmale gelöst.

Durch den erfindungsgemäßen Bereich des Anzeigeinstruments, in dem die verbleibende Zeit anzeigbar ist, in welcher der wenigstens eine Elektromotor in dem Boostbetrieb betrieben werden kann, erhält der Fahrer des Hybridfahrzeugs eine Information darüber, wie lange der Boostbetrieb noch aufrecht erhalten werden kann, so dass er seine Fahrweise dementsprechend ausrichten kann. Beispielsweise kann diese Information nützlich sein, um zu entscheiden, ob ein Überholvorgang noch durchgeführt werden kann oder nicht bzw. ob ein bereits begonnener Überholvorgang zu Ende geführt werden kann oder abgebrochen werden muss. Damit trägt die erfindungsgemäße Vorrichtung erheblich zur Erhöhung der Sicherheit im Straßenverkehr bei.

Dadurch, dass der Bereich, in dem die verbleibende Zeit anzeigbar ist, in dem Bereich liegt, in dem die in dem Boostbetrieb erreichbare Leistung des Elektromotors anzeigbar ist, brauchen keine zusätzlichen Flächen auf dem Anzeigeinstrument geschaffen werden, wodurch dieses seine ursprüngliche Größe behalten kann.

Eine alternative Lösung der Aufgabe ergibt sich aus Anspruch 2.

Eine vorteilhafte Weiterbildung der Erfindung darin bestehen, dass die in dem Boostbetrieb erreichbare Leistung des Elektromotors mittels eines Zeigers und die verbleibende Zeit mittels wenigstens eines Leuchtelements anzeigbar sind. Eine solche kombinierte Darstellung mittels eines Zeigers und eines Leuchtelements ist sehr übersichtlich und kann somit vom Fahrer sehr einfach abgelesen werden.

Alternativ dazu kann vorgesehen sein, dass die in dem Boostbetrieb erreichbare Leistung des Elektromotors mittels eines Leuchtelements in einer Richtung und die verbleibende Zeit in einer anderen Richtung des Bereichs anzeigbar sind. Auch eine solche zweidimensionale Anzeige des Boostbetriebs kann sehr übersichtlich sein und daher entsprechende Vorteile aufweisen.

Eine weitere vorteilhafte Ausgestaltung der Erfindung kann darin bestehen, dass die in dem Boostbetrieb des Elektromotors erreichbare Leistung in Abhängigkeit einer Temperatur einer mit dem Elektromotor verbundenen Batterie anzeigbar ist. Auf diese Weise erhält der Fahrer des mit der erfindungsgemäßen Vorrichtung ausgestatteten Hybridfahrzeugs Informationen über die tatsächlich erreichbare Leistung des Elektromotors, d. h. die obere Leistungsgrenze desselben, wodurch eventuell unterschiedliche Fahrleistungen des Hybridfahrzeugs für den Fahrer transparent und nachvollziehbar werden.

Vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Es zeigt:
- Fig. 1: eine sehr schematische Darstellung eines Hybridfahrzeugs;
- Fig. 2: eine erste Ausführungsform eines Anzeigeinstruments der erfindungsgemäßen Vorrichtung;
- Fig. 3: eine zweite Ausführungsform eines Anzeigeinstruments der erfindungsgemäßen Vorrichtung;
- Fig. 4: eine dritte Ausführungsform eines Anzeigeinstruments der erfindungsgemäßen Vorrichtung; und
- Fig. 5: eine vergrößerte Darstellung eines Teils des Anzeigeinstruments aus Fig. 4.

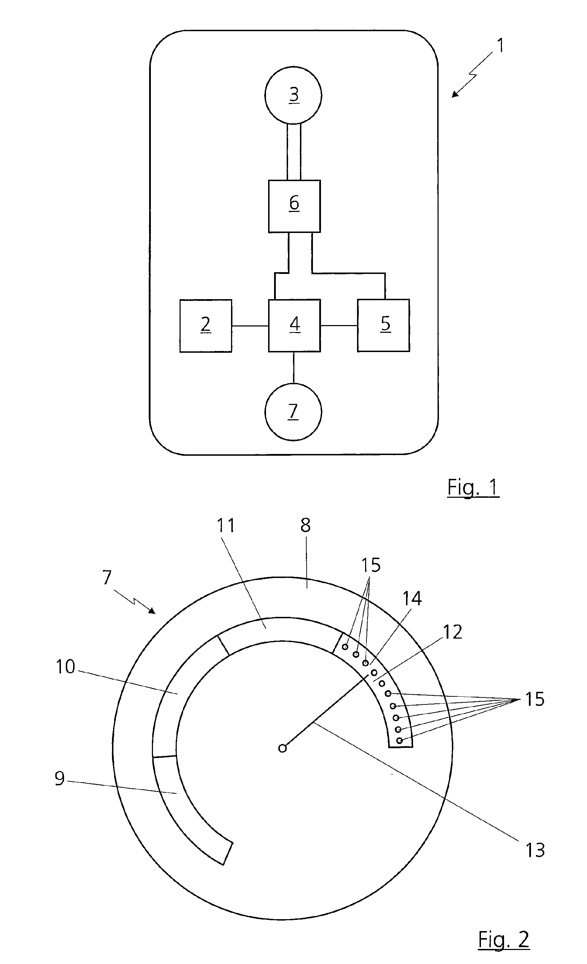

Fig. 1 zeigt in einer sehr schematischen Darstellung ein Hybridfahrzeug 1, das zu seinem Antrieb einen Verbrennungsmotor 2 und einen Elektromotor 3 aufweist. Grundsätzlich könnten auch mehr als der eine Elektromotor 3 vorgesehen sein. Im vorliegenden Fall ist der Verbrennungsmotor 2 über ein Motorsteuergerät 4 mit einer Batterie 5 verbunden. Das Motorsteuergerät 4 und die Batterie 5 sind wiederum mit einer Leistungselektronik 6 verbunden, die zur Steuerung des Elektromotors 3 dient und mit diesem auf an sich bekannte Weise verbunden ist. Mit dem Motorsteuergerät 4 ist im vorliegenden Fall außerdem eine Vorrichtung 7 zur Anzeige von Informationen des Hybridfahrzeugs 1 verbunden. Vorzugsweise befindet sich die Vorrichtung 7 in einem Innenraum des Hybridfahrzeugs 1, beispielsweise im Bereich einer Instrumententafel. Der in Fig. 1 dargestellte Aufbau des Hybridfahrzeugs 1 ist als rein beispielhaft anzusehen und die Vorrichtung 7, die nachfolgend ausführlich beschrieben wird, könnte auch bei Hybridfahrzeugen eingesetzt werden, die auf andere Art und Weise ausgeführt sind.

Die Vorrichtung 7 weist ein Anzeigeinstrument 8 auf, das in den Figuren 2, 3, 4 und 5 in verschiedenen Ausführungsformen dargestellt ist. Bei der Ausführungsform des Anzeigeinstruments 8 gemäß Fig. 2 ist dieses in insgesamt vier Bereiche unterteilt, die im Uhrzeigersinn mit den Bezugszeichen 9, 10, 11 und 12 bezeichnet sind. Dabei handelt es sich um einen ersten Bereich 9, in dem im vorliegenden Fall ein Aufladen der Batterie 5 angezeigt wird, um einen zweiten Bereich 10, in dem angezeigt wird, dass das Hybridfahrzeug 1 mit dem Elektromotor 3 betrieben werden kann bzw. wird, einen dritten Bereich 11, der den Betrieb des Verbrennungsmotors 2 zusammen mit dem Elektromotor 3 anzeigt, und einen vierten Bereich 12, der einen sogenannten Boostbetrieb des Elektromotors 3, der auch als Betrieb mit erhöhter Last bezeichnet werden kann, anzeigt. Des Weiteren weist das Anzeigeinstrument 8 einen Zeiger 13 auf, der sich im vorliegenden Betriebszustand des Hybridfahrzeugs 1 im vierten Bereich 12 befindet. Demnach wird der Elektromotor 3 in dem dargestellten Betriebszustand im Boostbetrieb betrieben, in dem der Elektromotor 3 zusätzliche Leistung abgeben kann. Da im Boostbetrieb eine maximale Leistung abgerufen wird, wird dabei auch der Verbrennungsmotor 2 betrieben. Der Boostbetrieb kann zum Beispiel durch einen Kick-down, d.h. ein vollständiges Durchtreten des Gaspedals, ausgelöst werden. Insoweit kann es sich um ein an sich bekanntes Anzeigeinstrument handeln, wie es beispielsweise in dem unter der Bezeichnung "Q5 hybrid" von der Anmelderin angebotenen Hybridfahrzeug eingesetzt wird.

Zusätzlich weist das Anzeigeinstrument 8 gemäß Fig. 2 einen Bereich 14 auf, in dem die verbleibende Zeit angezeigt wird, in welcher der Elektromotor 3 in dem Boostbetrieb betreibbar ist. Im vorliegenden Fall liegt der Bereich 14, in dem die verbleibende Zeit anzeigbar ist, innerhalb des vierten Bereichs 12, in dem die Leistung während des Boostbetriebs des Elektromotors 3 anzeigbar ist. Bei dem in Fig. 2 dargestellten Ausführungsbeispiel wird die verbleibende Zeit, in welcher der Elektromotor 3 in dem Boostbetrieb betrieben werden kann, mittels mehrerer Leuchtelemente 15 angezeigt, die beispielsweise als LEDs ausgebildet sein können. Dabei ist die verbleibende Zeit, in der der Elektromotor 3 in dem Boostbetrieb betrieben werden kann, umso länger, je mehr Leuchtelemente 15 eingeschaltet sind bzw. leuchten. Während des Boostbetriebs des Elektromotors 3 erlöschen also nach und nach die Leuchtelemente 15, bis das letzte Leuchtelement 15 erloschen ist, wodurch dem Fahrer des Hybridfahrzeugs 1 angezeigt wird, dass der Boostbetrieb des Elektromotors 3 nun beendet ist. Vorzugsweise erlöschen dabei zunächst die von dem dritten Bereich 11 abgewandten Leuchtelemente 15, so dass das letzte noch leuchtende Leuchtelement 15 dasjenige ist, das sich unmittelbar neben dem dritten Bereich 11 befindet.

Alternativ zu der Ausführungsform von Fig. 2 könnte sich der Bereich 14, in dem die verbleibende Zeit angezeigt wird, in der der Elektromotor 3 in dem Boostbetrieb betreibbar ist, auch parallel zu und beispielsweise außerhalb des vierten Bereichs 12 befinden. Vorzugsweise könnte in diesem Fall der Bereich 14 wiederum die Leuchtelemente 15 aufweisen.

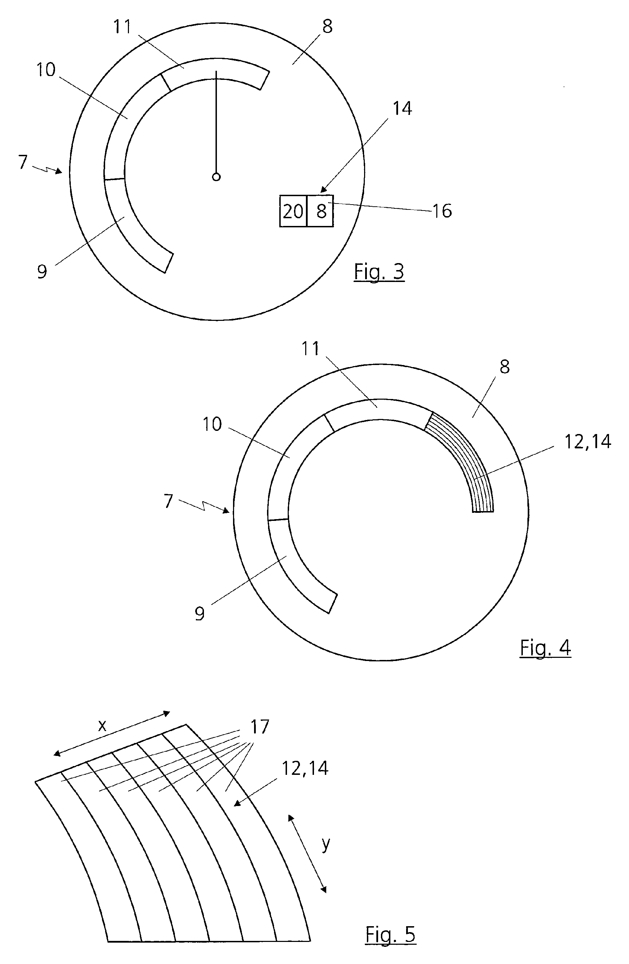

Bei der in Fig. 3 dargestellten Ausführungsform des Anzeigeinstruments 8 ist der Bereich 14, in dem die verbleibende Zeit angezeigt wird, in welcher der Elektromotor 3 in dem Boostbetrieb betrieben werden kann, mittels einer Zahlenanzeige 16 ausgebildet und damit separat von dem Bereich 12, in dem die in dem Boostbetrieb erreichbare Leistung des Elektromotors 3 anzeigbar ist. Im vorliegenden Fall wird die verbleibende Zeit in Sekunden angezeigt. Die Zahlenanzeige 16 kann zudem unterteilt sein, wobei im vorliegenden Fall in der rechten Hälfte die verbleibende Zeit und in der linken Hälfte die durch den Boostbetrieb des Elektromotors 3 zusätzlich zur Verfügung stehende Leistung in kW angezeigt wird. Gegebenenfalls kann dabei auch, wie im dargestellten Ausführungsbeispiel vorgesehen, auf den vierten Bereich 12 verzichtet werden bzw. dieser wird durch die linke Hälfte der Zahlenanzeige 16 gebildet.

Eine weitere Ausführungsform des Anzeigeinstruments 8 ist in den Figuren 4 und 5 dargestellt. Hierbei sind der vierte Bereich 12 und der Bereich 14, in dem die verbleibende Zeit anzeigbar ist, in welcher der Elektromotor 3 in dem Boostbetrieb betreibbar ist, identisch bzw. der Bereich 14, in dem die verbleibende Zeit angezeigt wird, liegt in dem Bereich 12, in dem die in dem Boostbetrieb erreichbare Leistung des Elektromotors 3 angezeigt wird.

Wie sich aus der vergrößerten Darstellung von Fig. 5 ergibt, weist der gemeinsame, mit den Bezugszeichen 12 und 14 bezeichnete Bereich ein Leuchtelement 17 auf, das in einer mit "x" bezeichneten Richtung die in dem Boostbetrieb erreichbare Leistung des Elektromotors 3 und in einer mit "y" bezeichneten Richtung die verbleibende Zeit anzeigt, in welcher der Elektromotor 3 in dem Boostbetrieb betreibbar ist. Im vorliegenden Fall sind rein beispielhaft sechs Leuchtelemente 17 parallel nebeneinander angeordnet, wobei im dargestellten Ausführungsbeispiel die Leistung durch ein Erlöschen der Leuchtelemente 17 von rechts nach links und die sich verringernde Zeit durch ein Erlöschen der Leuchtelemente 17 von unten nach oben, also in Richtung des sich an den dritten Bereich 11 anschließenden Endes des vierten Bereichs 12 bzw. des Bereichs 14, abnehmen. Bei den Leuchtelementen 17 handelt es sich vorzugsweise um ein LCD-Feld.

Des Weiteren ist im vorliegenden Fall auf nicht dargestellte Art und Weise vorgesehen, dass die in dem vierten Bereich 12 angezeigte, in dem Boostbetrieb des Elektromotors 3 erreichbare Leistung in Abhängigkeit einer Temperatur der mit dem Elektromotor 3 verbundenen Batterie 5 angezeigt wird. Vorzugsweise berechnet dabei das Motorsteuergerät 4, gegebenenfalls zusammen mit der Leistungselektronik 6, die tatsächlich erreichbare Leistung des Elektromotors 3, wenn dieser beispielsweise aufgrund von zu geringen Batterietemperaturen oder anderer Einschränkungen, z. B. Derating, nicht seine gesamte Leistung erreichen kann. Auch die verbleibende Zeit, in welcher der Elektromotor 3 in dem Boostbetrieb betrieben werden kann, kann durch die Leistungselektronik 6 bzw. das Motorsteuergerät 4 berechnet werden.

## Patentansprüche

1. Vorrichtung zur Anzeige von Informationen in einem Hybridfahrzeug mit einem Anzeigeinstrument, welches mehrere Bereiche zum Anzeigen des aktuellen Betriebszustands eines Verbrennungsmotors und wenigstens eines Elektromotors des Hybridfahrzeugs aufweist, wobei in einem der Bereiche die in einem Boostbetrieb des wenigstens einen Elektromotors erreichbare Leistung anzeigbar ist,
**dadurch gekennzeichnet, dass**
das Anzeigeinstrument (8) einen Bereich (14) aufweist, in dem die verbleibende Zeit anzeigbar ist, in welcher der wenigstens eine Elektromotor (3) in dem Boostbetrieb betreibbar ist, und dass
der Bereich (14), in dem die verbleibende Zeit anzeigbar ist, in dem Bereich (12) liegt, in dem die in dem Boostbetrieb erreichbare Leistung des Elektromotors (3) anzeigbar ist.

2. Vorrichtung zur Anzeige von Informationen in einem Hybridfahrzeug mit einem Anzeigeinstrument, welches mehrere Bereiche zum Anzeigen des aktuellen Betriebszustands eines Verbrennungsmotors und wenigstens eines Elektromotors des Hybridfahrzeugs aufweist, wobei in einem der Bereiche die in einem Boostbetrieb des wenigstens einen Elektromotors erreichbare Leistung anzeigbar ist,
**dadurch gekennzeichnet, dass**
das Anzeigeinstrument (8) einen Bereich (14) aufweist, in dem die verbleibende Zeit anzeigbar ist, in welcher der wenigstens eine Elektromotor (3) in dem Boostbetrieb betreibbar ist, und dass
der Bereich (14), in dem die verbleibende Zeit anzeigbar ist, im Wesentlichen parallel zu dem Bereich (12) angeordnet ist, in dem die in dem Boostbetrieb erreichbare Leistung des Elektromotors (3) anzeigbar ist.

3. Vorrichtung nach Anspruch 1 oder 2,
**dadurch gekennzeichnet, dass**
die in dem Boostbetrieb erreichbare Leistung des Elektromotors (3) mittels eines Zeigers (13) und die verbleibende Zeit mittels wenigstens eines Leuchtelements (15) anzeigbar ist.

4. Vorrichtung nach Anspruch 1,
**dadurch gekennzeichnet, dass**
die in dem Boostbetrieb erreichbare Leistung des Elektromotors (3) mittels eines Leuchtelements (17) in einer Richtung (x) und die verbleibende Zeit in einer anderen Richtung (y) des Bereichs (14) anzeigbar ist.

5. Vorrichtung nach einem der Ansprüche 1 bis 4,
**dadurch gekennzeichnet, dass**
die in dem Boostbetrieb des Elektromotors (3) erreichbare Leistung in Abhängigkeit einer Temperatur einer mit dem Elektromotor (3) verbundenen Batterie (5) anzeigbar ist.

## Claims

1. Device for displaying information in a hybrid vehicle comprising a display instrument, which comprises a plurality of zones for displaying the current operating status of an internal combustion engine and at least one electric motor of the hybrid vehicle, wherein in one of the zones the power which can be produced in a boost mode of the at least one electric motor can be displayed, **characterised in that** the display instrument (8) comprises a zone (14) in which the remaining time can be displayed, in which the at least one electric motor (3) can be operated in the boost mode and **in that** the zone (14) in which the remaining time can be displayed lies in the zone (12) in which the power of the electric motor (3) produced in the boost mode can be displayed.

2. Device for displaying information in a hybrid vehicle comprising a display instrument, which comprises a plurality of zones for displaying the current operating status of an internal combustion engine and at least one electric motor of the hybrid vehicle, wherein in one of the zones the power which can be produced in a boost mode of the at least one electric motor can be displayed, **characterised in that** the display instrument (8) comprises a zone (14) in which the remaining time can be displayed, in which the at least one electric motor (3) can be operated in the boost mode and **in that** the zone (14) in which the remaining time can be displayed, is arranged essentially parallel to the zone (12) in which the power of the electric motor (3) produced in the boost mode can be displayed.

3. Device according to either claim 1 or claim 2, **characterised in that** the power of the electric motor (3) produced in the boost mode can be displayed by means of a pointer (13) and the remaining time can be displayed by means of at least one light element (15).

4. Device according to claim 1, **characterised in that** the power of the electric motor (3) produced in the boost mode can be displayed by means of a light element (17) in a direction (x) and the remaining time can be displayed in another direction (y) of the zone (14).

5. Device according to any one of claims 1 to 4, **characterised in that** the power produced in the boost mode of the electric motor (3) can be displayed as a function of a temperature of a battery (5) connected to the electric motor (3).

## Revendications

1. Dispositif servant à afficher des informations dans un véhicule hybride, comprenant un instrument d'affichage, qui présente plusieurs zones servant à afficher l'état de fonctionnement actuel d'un moteur à combustion interne et au moins d'un moteur électrique du véhicule hybride, la puissance pouvant être atteinte dans un mode d'amplification du moteur électrique au moins au nombre de un pouvant être affichée dans une des zones,
**caractérisé en ce**
**que** l'instrument d'affichage (8) présente une zone (14) dans laquelle le temps restant peut être affiché, au cours duquel le moteur électrique (3) au moins au nombre de un peut fonctionner dans le mode d'amplification, et
**que** la zone (14) dans laquelle le temps restant peut être affiché se trouve dans la zone (12) dans laquelle la puissance, pouvant être atteinte dans le mode d'amplification, du moteur électrique (3) peut être affichée.

2. Dispositif servant à afficher des informations dans un véhicule hybride, comprenant un instrument d'affichage, qui présente plusieurs zones servant à afficher l'état de fonctionnement actuel d'un moteur à combustion interne et au moins d'un moteur électrique du véhicule hybride, la puissance pouvant être atteinte dans un mode d'amplification du moteur électrique au moins au nombre de un pouvant être affichée dans l'une des zones,
**caractérisé en ce**
**que** l'instrument d'affichage (8) présente une zone (14) dans laquelle le temps restant peut être affiché, au cours duquel le moteur électrique (3) au moins au nombre de un peut fonctionner dans le mode d'amplification, et
**que** la zone (14) dans laquelle le temps restant peut être affiché est disposée essentiellement de manière parallèle par rapport à la zone (12) dans laquelle la puissance, pouvant être atteinte dans le mode d'amplification, du moteur électrique (3) peut être affichée.

3. Dispositif selon la revendication 1 ou 2,
**caractérisé en ce**
**que** la puissance, pouvant être atteinte dans le mode d'amplification, du moteur électrique (3) peut être affichée au moyen d'une aiguille (13) et le temps restant peut être affiché au moyen au moins d'un élément lumineux (15).

4. Dispositif selon la revendication 1,
**caractérisé en ce**
**que** la puissance, pouvant être atteinte dans le mode d'amplification, du moteur électrique (3) peut être affichée au moyen d'un élément lumineux (17) dans une direction (x) et le temps restant peut être affiché dans une autre direction (y) de la zone (14).

5. Dispositif selon l'une quelconque des revendications 1 à 4,
**caractérisé en ce**
**que** la puissance pouvant être atteinte dans le mode d'amplification du moteur électrique (3) peut être indiquée en fonction d'une température d'une batterie (5) reliée au moteur électrique (3).
